# EUROPÄISCHE PATENTSCHRIFT

(11) **EP 3 296 353 B1**
(45) Veröffentlichungstag und Bekanntmachung des Hinweises auf die Patenterteilung: **26.01.2022**
(21) Anmeldenummer: 16189511.5
(22) Anmeldetag: 19.09.2016
(51) Int. Cl.: C08K 5/098, C09D 167/08

(54) **LÖSEMITTELHALTIGE BESCHICHTUNGSMASSE FÜR LACKBESCHICHTUNGEN**
SOLVENT-CONTAINING COATING COMPOSITION FOR PAINT COATINGS
COMPOSITION DE REVÊTEMENT COMPRENANT UN SOLVANT ET REVÊTEMENTS LAQUES

(43) Veröffentlichungstag der Anmeldung: 21.03.2018
(73) Patentinhaber: DAW SE, 64372 Ober-Ramstadt (DE)
(72) Erfinder: Herrmann Beatrix, 64291 Darmstadt (DE); Menzel Stefan, 63110 Rodgau (DE); Daniel Andre, 64397 Modautal (DE)
(74) Vertreter: Metten, Karl-Heinz

(56) Entgegenhaltungen:
- EP-A1- 3 037 464
- WO-A1-2012/079624
- WO-A1-2013/045475
- WO-A1-2016/102464
- GB-A- 1 544 405
- US-B1- 6 187 384

## Beschreibung

Die vorliegende Erfindung betrifft eine lösemittelhaltige Beschichtungsmasse für Lackbeschichtungen und ein Beschichtungssystem enthaltend diese lösemittelhaltige Beschichtungsmasse. Ferner betrifft die Erfindung einen Kit-of-Parts für ein Beschichtungssystem enthaltend die lösemittelhaltige Beschichtungsmasse. Auch stellt die erfindungsgemäße Beschichtungsmasse ab auf eine Beschichtung gebildet aus der erfindungsgemäßen Beschichtungsmasse sowie die Verwendung dieser lösemittelhaltigen Beschichtungsmasse für die Herstellung von Lackbeschichtungen.

Lackbeschichtungen für Innen- und Außenanwendungen) beispielsweise auf Metall- oder Holzsubstraten, haben vielfältigen Anforderungen zu genügen. Wünschenswert ist neben einer ansprechenden Optik auch eine hinreichende Widerstandfähigkeit gegenüber mechanischen Einflüssen. Auch sollen Wettereinflüsse nicht zu Beeinträchtigungen führen. Darüber hinaus wird regelmäßig gefordert, dass sich die diese Beschichtungen liefernden Beschichtungsmassen einfach und unproblematisch applizieren lassen und zudem zügig unter Ausbildung einer glatten, hochwertigen Oberfläche abtrocknen. Insbesondere für Anwendungen in Innenräumen wird verstärkt nach Beschichtungsmassen verlangt, die sich durch einen geringen VOC-Gehalt auszeichnen und insbesondere auch geruchsarm sind.

Das Trocknen lösemittelhaltiger Beschichtungsmassen beruht regelmäßig auf physikalischen und chemischen Trocknungs- bzw. Aushärtungsprozessen. Zwecks Initiierung und Forcierung der chemischen, d.h. oxidativen Trocknung vermittels Luftsauerstoff setzt man häufig organische Kobaltsalze als sogenannte Primärtrockner zu. Angesichts immer strenger werdender gesetzlicher Vorgaben stellt sich u.a. die Frage, ob derartige Kobalt-basierte Trockner zukünftig in lösemittelhaltigen Beschichtungsmassen noch verwendet werden können. Darüber hinaus ist bekannt, dass bei Einsatz derartiger Primärtrockner während des oxidativen Trocknungsprozesses Aldehyde freigesetzt werden. Diese Aldehyde bzw. deren Abbauprodukte tragen mitunter zu einer Geruchsbelästigung bei und sind nicht selten auch aus gesundheitlicher Sicht zuweilen problematisch.

In der WO 2016/102464 A1 wird eine Beschichtungszusammensetzung beschrieben, umfassend ein Alkyd-enthaltendes Harz und einen Trockner mit einem zweikernigen Ligand/Mangan-Komplex, umfassend Mangan und einen 1,4,7-trisubstituierten-1,4,7-Triazacyclononan-Liganden. Das Alkyd-enthaltende Harz stellt eine alkydstabilisierte nicht-wässrige Dispersion von Partikeln eines Additionspolymers in einer nicht-wässrigen flüssigen Phase dar, die Alkyd enthält. Die Partikel des Additionspolymers können dabei durch Polymerisieren eines oder mehrerer ethylenisch ungesättigter Monomere in Gegenwart eines flüssigen Alkydmediums gewonnen werden. Die Beschichtungszusammensetzung der WO 2016/102464 A1 soll im Vergleich zu Zusammensetzungen, in denen andere Arten von Alkydharzen verwendet werden, zu einer überraschend gering ausgeprägten Dunkelvergilbung führen.

Es wäre daher wünschenswert, auf lösemittelhaltige Beschichtungsmassen zurückgreifen zu können, die nicht mehr mit den Nachteilen des Stands der Technik behaftet sind.

Der vorliegenden Erfindung lag daher die Aufgabe zugrunde, lösemittelhaltige Beschichtungsmassen verfügbar zu machen, die Beschichtungen liefern, die schadstoff- und/oder geruchsarm austrocknen und die vorzugsweise auf vielfältigen Substratunterlagen leicht appliziert werden können und sich auch für Innenanwendungen eignen.

Demgemäß wurde eine lösemittelhaltige Beschichtungsmasse gefunden, enthaltend oder bestehend aus
a) mindestens einem oxidativ trocknenden organischen Bindemittel, ausgewählt aus der Gruppe bestehend aus mindestens einem oxidativ trocknenden Alkydharz mit einem Ölgehalt oberhalb von 60% (= langöliger Alkydharz),
b1) mindestens einem Primärtrockner basierend auf Eisen, umfassend oder bestehend aus mindestens einem Komplexsalz des Eisens,
c1) mindestens einem ersten Sekundärtrockner umfassend oder bestehend aus mindestens einem organischen Salz des Zirkoniums, Strontiums, Lithiums, Aluminiums, insbesondere einem organischen Salz des Zirkoniums und/oder Strontiums,
e1) mindestens einem ersten Hautverhinderungsmittel,
e2) mindestens einem zweiten Hautverhinderungsmittel, das bei 20 °C über einen höheren Dampfdruck verfügt als das erste Hautverhinderungsmittel,
f) mindestens einen Eisen-Komplexliganden, insbesondere ausgewählt aus mono-, di-, tri-, tetra-, penta- und hexadentaten Stickstoffdonorliganden und
d) gegebenenfalls mindestens einem Additiv.

Geeignete Komplexsalze des Eisens basieren z.B. auf 3,7-Diaza-bicyclo[3.3.1]nonan-Liganden. Exemplarisch sei als besonders geeignet Eisen(2+)-chloro(dimethyl-9,9-dihydroxy-3-methyl-2,4-di-(2-pyridyl)-7-(pyridin-2-ylmethyl)-3,7-diazabicyclo[3.3.1]nonan-1,5-dicarboxylat)-chlorid genannt. Dessen Herstellung findet sich z.B. in der WO 2011095308 A1 offenbart.

Es hat sich überraschend gezeigt, dass bei kombinierter Verwendung eines Primärtrockners umfassend mindestens ein Komplexsalz des Eisens und eines ersten Sekundärtrockners umfassend mindestens ein organisches Salz des Zirkoniums, Strontiums, Lithiums oder Aluminiums mit mindestens einem oxidativ trocknenden organischen Bindemittel, ausgewählt aus der Gruppe bestehend aus mindestens einem oxidativ trocknenden langöligen Alkydharz bei gleichzeitig guter Trocknungsleistung sehr geruchsarme Beschichtungen erhalten werden.

Besonders gute Trocknungsleistungen kombiniert mit ausgeprägter Geruchsarmut der erhaltenen Beschichtungen gehen im Allgemeinen einher mit der Verwendung von Komplexsalzen des Eisens als Primärtrockner.

Überraschenderweise kann mit den erfindungsgemäßen Beschichtungsmassen bei Verwendung der genannten Komplexsalze die Gesamtmenge an auf Eisen- und Mangan basierten Primärtrocknern um ein Vielfaches gegenüber herkömmlichen Beschichtungsmassen enthaltend z.B. Kobalt-basierte Primärtrockner verringert werden.

Des Weiteren hat es sich als vorteilhaft herausgestellt, den erfindungsgemäßen Beschichtungsmassen zusätzlich solche Komplexliganden zuzusetzen, die mit den Eisenspezies der Komplexsalze des Primärtrockners eine koordinative Bindung eingehen können (Komponente f)). Besonders geeignet sind hierbei solche Eisen-Komplexliganden, d.h. Liganden, die Eisenspezies komplexieren können, die ausgewählt sind aus mindestens einem mono-, di-, tri-, tetra-, penta- und/oder hexadentaten Stickstoffdonorliganden. Hierbei kann es sich z.B. um stickstoffhaltige Lewis-Basen handeln. Solche geeigneten Komplexliganden sind z.B. der WO 2012/079624 A1 zu entnehmen.

Liegt in der erfindungsgemäßen Beschichtungsmasse ein Primärtrockner auf Eisenbasis vor, hat es sich demgemäß als vorteilhaft erwiesen, zusätzlich solche Komplexliganden zuzusetzen, die mit dem Eisen der Eisen-Komplexsalze des Primärtrockners eine koordinative Bindung eingehen können. Durch die Zugabe der genannten Komplexliganden kann die Trocknungsstabilität der erfindungsgemäßen Beschichtungsmassen nochmals verbessert werden.

Für das oxidativ trocknende organische Bindemittel greift man zurück auf solche Bindemittel, die ausgewählt sind aus der Gruppe bestehend aus mindestens einem oxidativ trocknenden langöligen Alkydharz. Unter einem langöligen Alkydharz im Sinne der vorliegenden Erfindung sind solche langöligen Systeme zu verstehen, die einen Ölgehalt bzw. eine Öllänge oberhalb von 60 % aufweisen. Unter einem kurzöligen Alkydharz ist demgegenüber eine solche kurzölige Verbindung zu verstehen, die über einen Ölgehalt bzw. eine Öllänge verfügt, die üblicherweise im Bereich von 20 bis 40 % liegt. Für mittelölige Alkydharze liegt der Ölgehalt bzw. die Öllänge im Bereich von 40 bis 60 %. Unter dem Ölgehalt bzw. der Öllänge soll hierbei in Bezug auf das Gesamtgewicht des Alkdyharzes der gewichtsprozentige Anteil derjenigen Fettsäuren, einschließlich Polyolrest verstanden werden, die mit den Hydroxygruppen der Polyoleinheiten im Alkydharz verbunden vorliegen. Im Sinne der vorliegenden Erfindung werden dadurch die Begriffe "Ölgehalt" und "Öllänge" synonym verwandt.

Die langöligen Alkydharze werden häufig gelöst in Kohlenwasserstoffen, insbesondere in entaromatisierten Kohlenwasserstoffen, in den erfindungsgemäßen Beschichtungsmassen eingesetzt. Das für die erfindungsgemäßen Beschichtungsmassen verwendete Bindemittel stellt bevorzugt auch eine solche Bindemittelmischung dar, umfassend langölige Alkydharze, insbesondere Isocyanat-modifizierte langölige Alkydharze, sowie Haftharze. Auf Haftharze greift man bevorzugt für die Beschichtung von Metalloberflächen zurück.

Besonders geeignete erfindungsgemäße Beschichtungsmassen umfassen ferner c2) mindestens einen zweiten Sekundärtrockner umfassend oder bestehend aus mindestens einem organischen Salz des Calciums, Zinks und einer beliebigen Mischung hiervon. Besonders zufriedenstellende Resultate stellen sich regelmäßig bei Verwendung eines organischen Salzes des Calciums als zweitem Sekundärtrockner neben einem organischen Salz des Zirkoniums oder einem organischen Salz des Strontiums als erstem Sekundärtrockner ein.

Dabei kann in einer besonders geeigneten Ausgestaltung vorgesehen sein, dass das organische Salz des ersten und/oder zweiten Sekundärtrockners Neodecanoate, Oleate, Stearate, Palmitate, Octoate und/oder Naphthenate, insbesondere Neodecanoate, umfasst, besonders bevorzugt Zirkonium- und/oder Strontiumneodecanoate.

Die erfindungsgemäßen Beschichtungsmassen zeichnen sich auch dadurch aus, dass sie neben einem ersten Hautverhinderungsmittel (Komponente e1)) über mindestens ein zweites Hautverhinderungsmittel (Komponente e2)) verfügen, das bei 20°C über einen höheren Dampfdruck verfügt als das erste Hautverhinderungsmittel. Hierdurch lässt sich besonders wirkungsvoll das Antrocknen von Oberflächenschichten, d.h. die Hautbildung vermeiden. Bevorzugte Hautverhinderungsmittel, insbesondere erste Hautverhinderungsmittel, können dabei ausgewählt werden aus der Gruppe bestehend aus substituierten Phenolen, Dialkylaminoethanol, insbesondere Dimethylaminoethanol und/oder Diethylaminoethanol, Dialkylhydroxylamin, insbesondere

Dimethylhydroxylamin und/oder Diethylhydroxylamin, Dibenzylhydroxylamin, Hydroxylamin, Diethylamin, Triethylamin und beliebigen Mischungen hiervon. Hierbei sind insbesondere solche ersten Hautverhinderungsmittel bevorzugt, die über eine Verdunstungszahl (VD) nach DIN 53170 (bei 20°C und 65 ±5 % relativer Luftfeuchtigkeit mit Diethylether als Bezugsstoffs) größer 200, bevorzugt größer 500 und besonders bevorzugt größer 1000 verfügen.

Für das zweite Hautverhinderungsmittel greift man bevorzugt auf Ketoxime, insbesondere Acetonoxim, Butanonoxim, Pentanonoxim oder deren beliebige Mischungen zurück. Besonders geeignete zweite Hautverhinderungsmittel zeichnen sich durch eine Verdunstungszahl (VD) nach DIN 53170 (bei 20°C und 65 ±5 % relativer Luftfeuchtigkeit mit Diethylether als Bezugsstoffs) kleiner oder gleich 140, vorzugsweise kleiner oder gleich 75 und besonders bevorzugt kleiner oder gleich 40 aus. Es hat sich überraschend gezeigt, dass die erfindungsgemäßen Beschichtungsmassen auch ohne Methylethylketoxim (MEKO) als Hautverhinderungsmittel auskommen, und zwar ohne Einbußen bei der Güte der Hautverhinderung in Kauf nehmen zu müssen.

Die Hautverhinderungsmittel wirken üblicherweise als Reduktions- oder Komplexierungsmittel und verhindern die frühzeitige Aushärtung der Beschichtungsmasse an der Oberfläche. Der Einsatz eines zweiten Hautverhinderungsmittels, das flüchtiger ist als das erste Hautverhinderungsmittel und sich in Transport- oder Lagergebinden für die erfindungsgemäßen Beschichtungsmassen auch in der Atmosphäre oberhalb der Beschichtungsmasse befindet, trägt üblicherweise dazu bei, dass Beschichtungsfilme, die sich bei Bewegung oder Schrägstellung des Gebindes an dessen Innenwandung bilden, nicht aushärten. Insbesondere bei Mitverwendung des zweiten Hautverhinderungsmittels hat sich gezeigt, dass eine Stippenbildung unterdrückt werden kann. Derartigen Stippen gehen häufig auf am Innenrand eines Gebindes angetrocknete Beschichtungsbestandteile zurück, die nach dem Trocknen abbrechen und in die Beschichtungsmasse fallen.

Für einige Anwendungen hat es sich als zweckmäßig erwiesen, die erfindungsgemäße Beschichtungsmasse mit mindestens einem Rheologiemodifizierungsmittel auszustatten, insbesondere ausgewählt aus der Gruppe bestehend aus Schichtsilikaten ausgewählt aus der Gruppe bestehend aus Bentoniten, modifizierten Schichtsilikaten, insbesondere organisch modifizierten Schichtsilikaten, thixotropen Alkydharzen und deren Mischungen. Bevorzugt wird unter den Rheologiemodifizierungsmitteln auf thixotrope Alkydharze zurückgegriffen.

Modifizierte sowie insbesondere organisch modifizierte Schichtsilikate können beispielsweise durch Vermischen von quartären Ammoniumsalzen mit einem Ton, beispielsweise Smektiten, Montmorilloniten, Bentoniten und/oder Sepioliten erhalten werden. Hierbei entstehen regelmäßig sogenannte exfolierte Schichtsilikatsysteme. Die quartären Ammoniumsalze verfügen im Allgemeinen über mindestens einen, vorzugsweise mindestens zwei oder zwei langkettige gesättigte oder Doppelbindungen enthaltende Kohlenwasserstoffreste, beispielsweise eine lineare oder verzweigte, insbesondere lineare, Alkyl- oder Alkylenkette. Exemplarisch seien langkettige Kohlenwasserstoffreste auf Basis natürlicher Fettsäuren wie Ölsäure, Linolsäure, Palmitinsäure, Stearinsäure und/oder Myristinsäure genannt. Beispielsweise seien als geeignete modifizierte Schichtsilikate Quatemium-90 Sepiolite und Quatemium-90 Montmorillonite genannt.

Beispielsweise können auch beliebige Mischungen an solchen langkettigen Kohlenwasserstoffresten eingesetzt werden, beispielsweise auf Basis des Palmöls oder Talgs. Bevorzugt wird auf solche modifizierten Schichtsilikate auf Basis von Sepioliten und Montmorilloniten zurückgegriffen. Für die Herstellung geeigneter modifizierter Schichtsilikate sei exemplarisch auf die WO 97/30950 verwiesen.

Unter thixotrope Alkydharze im Sinne der vorliegenden Erfindung fallen z.B. solche Alkydharze, die aus einer partiellen Umsetzung von Polyamiden aus polymeren Fettsäuren und Polyaminen mit Alkylharzen herrühren, sogenannte Polyamid-modifizierte Alkydharze. Ferner können auch Polyhamstoff-modifizierte Alkydharze, auch Polyharnstoffthixotropierte Alkydharze genannt, als thixotrope Alkydharze im Sinne der Erfindung eingesetzt werden. Exemplarisch sei auf geeignete thixotrope Alkydharze verwiesen, wie sie in der EP 922 738 B1 beschrieben sind. Mithilfe dieser Rheologiemodifizierungsmittel, insbesondere mithilfe von thixotropierten Alkydharzen lässt sich die Standfestigkeit der mit den erfindungsgemäßen Beschichtungsmassen erhaltenen Beschichtungsfilme nochmals verbessern.

Besonders geeignete erfindungsgemäße Beschichtungsmassen enthalten ferner neben dem mindestens einen oxidativ trocknenden organischen Bindemittel, ausgewählt aus der Gruppe bestehend aus mindestens einem oxidativ trocknenden langöligen Alkydharz, mindestens ein oxidativ trocknendes modifiziertes mittelöliges und/oder langöliges Alkydharz. Bevorzugte oxidativ trocknende modifizierte mittelölige und langölige Alkydharze können dabei ausgewählt sein aus der Gruppe bestehend aus silikonisierten Alkydharzen, acrylierten Alkydharzen, Isocyanat-modifizierten Alkydharzen und beliebigen Mischungen hiervon. Besonders bevorzugt wird hierbei auf Isocyanat-modifizierte langölige Alkydharze zurückgegriffen.

Für eine Reihe an Anwendungen können die erfindungsgemäßen Beschichtungsmassen ferner über mindestens einen Füllstoff verfügen, insbesondere ausgewählt aus der Gruppe bestehend aus Calciumcarbonat, z.B. gefälltes Calciumcarbonat (auch synthetisches Calciumcarbonat genannt) und/oder natürliches Calciumcarbonat, insbesondere natürliches Calciumcarbonat, Dolomit, Silikaten, insbesondere Schichtsilikaten ausgewählt aus der Gruppe bestehend aus Talkum, Glimmer, vorzugsweise mikronisiertem Glimmer, Feldspat, Pyrophyllit, Serpentin, Kaolinit und deren Mischungen, Bariumsulfat, z.B. synthetisches Bariumsulfat und/oder natürliches Bariumsulfat, insbesondere synthetisches Bariumsulfat, und einer beliebigen Mischung hiervon. Besonders bevorzugte Füllstoffe umfassen Dolomit, Talkum, synthetisches Bariumsulfat, mikronisierten Glimmer sowie beliebige Mischungen der vorangehend genannten Füllstoffe.

Für eine Reihe an Ausführungsformen der erfindungsgemäßen Beschichtungsmasse lassen sich mit diesen matte Beschichtungen erhalten. Vielfach hat es sich jedoch als vorteilhaft erwiesen, ein mattes Erscheinungsbild der Beschichtungsoberfläche dadurch zu erhalten, dass man der erfindungsgemäßen Beschichtungsmasse ferner mindestens ein Mattierungsmittel (Komponente j)) zugibt. Als Mattierungsmittel greift man häufig auf Kieselsäure, insbesondere Fällungskieselsäure, Wachse, vorzugsweise mit einer Teilchengröße D90, bestimmt nach ISO 13320, im Bereich von 5 bis 15 µm, und besonders bevorzugt nachbehandelte Fällungskieselsäure zurück. Diese Fällungskieselsäure wird dabei regelmäßig mit einer Teilchengröße D₅₀, bestimmt nach ISO 13320, im Bereich von 1 µm bis 25 µm, bevorzugt im Bereich von 2 µm bis 20 µm und besonders bevorzugt im Bereich von 3 µm bis 18 µm, eingesetzt. Interessanterweise wurde gefunden, dass durch die Zugabe von Mattierungsmitteln das Trocknungsverhalten der erfindungsgemäßen Beschichtungsmassen gesteuert werden kann.

Als Lösemittel für die erfindungsgemäße lösemittelhaltige Beschichtungsmasse wird bevorzugt mindestens ein, insbesondere im Wesentlichen aromatenfreier, aliphatischer Kohlenwasserstoff eingesetzt, vorzugsweise ausgewählt aus der Gruppe bestehend aus, insbesondere entaromatisiertem Testbenzin, n-Paraffinen, Isoparaffinen, Cycloparaffinen und beliebigen Mischungen hiervon.. Besonders bevorzugt kommen entaromatisierte aliphatische Kohlenwasserstoffe zum Einsatz. Das Lösemittel liegt in der erfindungsgemäßen Beschichtungsmasse üblicherweise in einer Menge im Bereich von 7 bis 45 Gew. %, vorzugsweise im Bereich von 9 bis 40 Gew. % vor.

Als aromatenfrei im Sinne der vorliegenden Erfindung sollen solche Lösemittel bzw. Kohlenwasserstoffe verstanden werden, die gemäß der Definition TRGS 900 zur TRGS 900 Gruppe 1 gehören. Gemäß der VdL-Richtlinie Bautenanstrichstoffe (Richtlinie zur Deklaration von Inhaltsstoffen in Bautenlacken, Bautenfarben und verwandten Produkten) VdL-RL 01 (4. Revision) des Verbands der deutschen Lack- und Druckfarbenindustrie e.V. (revidierte Ausgabe November 2013) sollen insbesondere auch solche Lösemittel bzw. aliphatischen Kohlenwasserstoffe aromatenfrei im Sinne der vorliegenden Erfindung verstanden werden, die zu Beschichtungen aus den erfindungsgemäßen Beschichtungsmassen führen, welche einen Aromatengehalt kleiner 1 Gew.-%, bestimmt nach DIN 55683, aufweisen (s.a. 4.2.2. der VdL-RL 01). Ganz bevorzugt sollen im Sinne der vorliegenden Erfindung unter aromatenfrei solche Lösemittel bzw. aliphatischen Kohlenwasserstoffe verstanden werden, die einen Aromatengehalt kleiner 0,2 Gew.-%, vorzugsweise kleiner 0,1 Gew.-%, besitzen.

In einer zweckmäßigen Ausgestaltung der erfindungsgemäßen Beschichtungsmassen sind die Additive ausgewählt aus der Gruppe bestehend aus Entschäumern, Lichtschutzmitteln, Radikalfängern, Lichtschutzmitteln, Netzmitteln, Dispergiermitteln, Oberflächenadditiven, insbesondere Silikonoberflächenadditiven, beispielsweise polyethermodifiziertes Polymethyialkylsiloxan und/oder Silikonpolyether-Copolymere, und/oder oberflächenaktive Polyacrylate, Wachse und/oder oberflächenaktive Polyacrylate, und beliebigen Mischungen dieser Verbindungen.

Als geeignete Lichtschutzmittel kann man sogenannte HALS-Verbindungen (*hindered amine light stabilizers*) verwenden. Diese Verbindungen ermöglichen häufig eine sehr gute Wetterstabilität, und nicht selten geht mit diesen auch eine reduzierte Kreidungsneigung einher. Lichtschutzmittel können z. B. in einer Menge im Bereich von 0,1 bis 2,0 Gew. %, vorzugsweise im Bereich von 0,2 bis 0,75 Gew. %, jeweils bezogen auf das Gesamtgewicht der Beschichtungsmasse eingesetzt werden.

Netz- und Dispergiermittel können den erfindungsgemäßen Beschichtungsmassen zugesetzt werden, um die Pigmente und/oder Füllstoffe zu stabilisieren und um beispielsweise ein Sedimentieren von Pigmenten und Füllstoffen zu verhindern. Netz- und Dispergiermittel tragen regelmäßig dazu bei, dass die Pigmente und/oder Füllstoffe nicht reagglomerisieren. Über den Zusatz an Netz- und Dispergiermitteln kann man zu einer verbesserten Lagerstabilität gelangen. Auch kann die Dispergierbarkeit verbessert werden, indem man mit Hilfe von Netz- und Dispergiermitteln die Pigmente stabilisiert bzw. eine Agglomeratbildung verhindert. Des Weiteren können die Netz- und/oder Dispiergiermittel zum Beispiel zu einem verbesserten Deckvermögen verhelfen. Geeignete Netzmittel umfassen beispielsweise die Salze ungesättigter Polyamide und/oder die Salze von sauren Polyestern, insbesondere von niedermolekularen sauren Polyestern.

Als Entschäumer können beispielsweise Polysiloxane eingesetzt werden. Geeignete schaumzerstörende bzw. schaumunterbindende Polysiloxane sind dem Fachmann bekannt.

Besonders bevorzugt sind dabei solche erfindungsgemäßen Beschichtungsmassen, die im Wesentlichen frei von Primärtrocknern und Sekundärtrocknern auf Kobalt-, Barium- und/oder Bleibasis sind. Als im Wesentlichen frei von Primärtrocknern auf Kobaltbasis soll im Sinne der Erfindung im Einklang mit der Norm EN 71, Teil 3, eine solche Beschichtungsmasse verstanden werden, die nicht mehr als 2,6 ppm (mg/kg) an Kobalt enthält. Als im Wesentlichen frei von Sekundärrtrocknern auf Blei-Basis soll im Sinne der Erfindung im Einklang mit der Norm EN 71, Teil 3, eine solche Beschichtungsmasse verstanden werden, die nicht mehr als 3,4 ppm (mg/kg) an Blei enthält. Besonders bevorzugt sind dabei solche erfindungsgemäßen Beschichtungsmassen, die vollständig frei von Primärtrocknern auf Kobaltbasis und/oder von Sekundärtrocknern auf Blei-Basis sind, wobei solche Beschichtungsmassen hervorzuheben sind, die sowohl vollständig frei von Primartrocknern auf Kobaltbasis wie auch vollständig frei von Sekundärtrocknern auf Blei-Basis sind. Vollständig frei soll bedeuten, dass die Mengen an Kobalt und Blei derart gering sind, dass sie unterhalb der Nachweisgrenze gegenwärtig gängiger Analysetechniken liegen.

Des Weiteren sind auch solche erfindungsgemäßen Beschichtungsmasse bevorzugt, die im Wesentlichen frei von 2-Ethylhexansäure sind.

Des Weiteren kann im Zusammenhang mit dem Langölanteil der oxidativ trocknenden langöligen Alkydharze vorgesehen sein, dass diese auf Linolsäure, Linolensäure und/oder Ölsäure basieren, gegebenenfalls unter Zusatz von Palmitinsäure. Bevorzugt basiert der Langölanteil der der oxidativ trocknenden langöligen Alkydharze auf Linolsäure, Linolensäure und Ölsäure unter Zusatz von Palmitinsäure.

Unter den oxidativ trocknenden langöligen Alkydharzen sind diejenigen besonders bevorzugt, um die der Erfindung zu Grunde liegende Aufgabe zu lösen, die, ermittelt gemäß DIN 53241-1, eine Jodzahl nicht größer als 120, insbesondere nicht größer als 100, bevorzugt im Bereich von 20 bis 120 oder 20 bis 100 und besonders bevorzugt im Bereich von 40 bis 80 aufweisen, jeweils bezogen auf 100% Festkörper des Bindemittels.

Ganz besonders bevorzugt lösen solche erfindungsgemäßen Beschichtungsmassen die der Erfindung zu Grunde liegenden Aufgaben, bei denen der Anteil an dem Primärtrockner basierend auf Eisen, in Bezug auf dessen Metallanteil, im Bereich von 0,0001 bis 0,10 Gewichtsprozent, bevorzugt im Bereich von 0,0005 bis 0,05 Gewichtsprozent und besonders bevorzugt im Bereich von 0,001 bis 0,006 Gewichtsprozent liegt, jeweils bezogen auf das Gesamtgewicht an oxidativ trocknendem organischen Bindemittel, oder dass der Anteil an dem Primärtrockner basierend auf Mangan, in Bezug auf dessen Metallanteil, im Bereich von 0,0001 bis 1,0 Gewichtsprozent, bevorzugt im Bereich von 0,0005 bis 0,5 Gewichtsprozent und besonders bevorzugt im Bereich von 0,001 bis 0,05 Gewichtsprozent liegt, jeweils bezogen auf das Gesamtgewicht an oxidativ trocknendem organischen Bindemittel, und/oder dass und/oder bei dem der Anteil an dem mindestens einen ersten Sekundärtrockner umfassend oder bestehend aus mindestens einem organischen Salz des Zirkoniums, Strontiums, Bariums, Lithiums und/oder Aluminiums, in Bezug auf dessen Metallanteil, im Bereich von 0,01 bis 3,0 Gewichtsprozent, bevorzugt im Bereich von 0,05 bis 2,0 Gewichtsprozent und besonders bevorzugt im Bereich von 0,1 bis 1,5 Gewichtsprozent liegt, jeweils bezogen auf das Gesamtgewicht an oxidativ trocknendem organischen Bindemittel, und/oder bei dem der Anteil an dem mindestens einen zweiten Sekundärtrockner umfassend oder bestehend aus mindestens einem organischen Salz des Calciums, Zinks und einer beliebigen Mischung, in Bezug auf dessen Metallanteil, hiervon im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht an oxidativ trocknendem organischen Bindemittel, und/oder bei dem der Anteil an dem mindestens einen ersten Hautverhinderungsmittel im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht der Beschichtungsmasse, und/oder bei dem der Anteil an dem mindestens einen zweiten Hautverhinderungsmittel im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht der Beschichtungsmasse, und/oder bei dem der Anteil an Lösemittel im Bereich von 7 bis 45 Gewichtsprozent und bevorzugt 9 bis 40 Gewichtsprozent liegt, jeweils bezogen auf das Gesamtgewicht der Beschichtungsmasse, wobei die Anteile der die Beschichtungsmasse bildenden Komponenten jeweils stets 100 Gewichtsprozent ergeben.

Die erfindungsgemäßen Beschichtungsmassen eignen sich vor allem für den Einsatz als Bautenlacke oder als Bestandteil hiervon. Es kann sich bei der erfindungsgemäßen Beschichtungsmasse um eine, insbesondere thixotrope, Decklackbeschichtungsmasse, eine, insbesondere thixotrope, Grundierungsbeschichtungsmasse oder eine, insbesondere thixotrope, transparente oder semitransparente Endbeschichtungsmasse oder einen Bestandteil hiervon handeln. Diese Beschichtungsmassen kommen vorzugsweise im Innenbereich zum Einsatz. Demgemäß stellen sie dann eine Innendecklackbeschichtungsmasse, eine Innengrundierungsbeschichtungsmasse oder eine transparente oder semitransparente Endinnenlasurbeschichtungsmasse oder einen Bestandteil hiervon dar.

Die erfindungsgemäße Beschichtungsmasse kann als sogenannte 1-Topf-Beschichtungsmasse eingesetzt werden. Sie kann dabei sowohl als Grundierung, als auch als Mittelschicht als auch als Schlussbeschichtung verwendet werden. Die anwendungsgemäße Vorbereitung des jeweiligen Substrates ist vor der eigentlichen Applikation erforderlich. Gegebenenfalls ist die Beschichtungsmasse vor der Applikation aufzurühren. Die erfindungsgemäßen Beschichtungsmassen eignen sich sowohl für die Auftragung auf insbesondere vorbehandelten, beispielsweise grundierten, metallischen Substraten, beispielsweise auf Eisen, Stahl, Zink, verzinktem Stahl, Aluminium oder Kupfer. Die erfindungsgemäße Beschichtungsmasse kann aber auch zur Beschichtung von insbesondere vorbehandelten Kunststoffoberflächen, beispielsweise Hart-PVC-Oberflächen und auch von, insbesondere vorbehandelten, Holzbauteilen im Innen- und Außenbereich, vorzugsweise im Innenbereich, eingesetzt werden. Mit der erfindungsgemäßen Beschichtungsmasse geht außerdem der Vorteil einher, dass diese in verschiedenen Grundversionen, beispielsweise transparent oder weiß zur Verfügung gestellt werden kann und abtönbar ist.

Von besonderem Vorteil ist auch, dass die erfindungsgemäßen Beschichtungsmassen vollständig ohne Primärtrockner auf Kobalt- und/oder Sekundärtrockner auf Bleibasis auskommen, gleichwohl ein hervorragendes Trocknungsprofil zeigen. Mit den erfindungsgemäßen Beschichtungsmassen gelangt man zu sehr lagerstabilen Systemen, die auch nach längerer Lagerzeit nicht zu Gelbildung bzw. Gelierung neigen. Beispielsweise kann ohne weiteres eine einjährige Lagerzeit garantiert werden. Von besonderem Vorteil ist, dass die erfindungsgemäßen Beschichtungsmassen zu Beschichtungen führen, die sehr geruchsarm oxidativ trocknend sind.

Des Weiteren kann im Zusammenhang mit dem Langölanteil der oxidativ trocknenden langöligen Alkydharze vorgesehen sein, dass diese auf Linolsäure, Linolensäure und/oder Ölsäure basieren, gegebenenfalls unter Zusatz von Palmitinsäure. Bevorzugt basiert der Langölanteil der oxidativ trocknenden langöligen Alkydharze auf Linolsäure, Linolensäure und Ölsäure unter Zusatz von Palmitinsäure.

Zwecks geeigneter Farbeinstellung sind die erfindungsgemäßen Beschichtungsmassen in der Regel alternativ oder zusätzlich auch mit mindestens einem Farbmittel versetzt. Unter den Farbmitteln greift man bevorzugt auf Pigmente zurück. Unter den Weißpigmenten ist Titandioxid bevorzugt. Als geeignete Pigmente kommen beispielsweise ebenfalls Aluminium-Pigmente, und/oder Aluminiumflakes, in Betracht. Pigmente und/ oder Füllstoffe werden häufig in Mengen von 1 bis 30 Gew. % und vorzugsweise im Bereich von 2 bis 20 Gew. %, jeweils bezogen auf das Gesamtgewicht der Beschichtungsmasse, eingesetzt. Aluminiumpigmente oder Aluminiumflakes können zum Beispiel in Mengen im Bereich vom 0 bis 20 Gew.-%, bevorzugt im Bereich 1 bis 15 Gew.-%, jeweils bezogen auf das Gesamtgewicht der Beschichtungsmasse, eingesetzt werden.

Die der Erfindung zu Grunde liegenden Aufgabe wird des Weiteren gelöst durch ein Beschichtungssystem enthaltend oder gebildet aus mindestens einer erfindungsgemäßen Beschichtungsmasse und mindestens einer lösemittelhaltigen Farbtonpaste.

Ferner wird die der Erfindung zu Grunde liegenden Aufgabe gelöst durch eine Beschichtung auf einem Substrat, erhalten oder erhältlich durch Auftragen und physikalisches und chemisches Trocknen der erfindungsgemäßen Beschichtungsmasse oder des erfindungsgemäßen Beschichtungssystems. Bei der erfindungsgemäßen Beschichtung handelt es sich vorzugsweise um eine Decklackbeschichtung, eine Grundierungsbeschichtung oder eine transparente oder semitransparente Endbeschichtung, vorzugsweise für den Innenbereich.

Die erfindungsgemäße Beschichtung verfügt zweckmäßigerweise über eine durchschnittliche Trockenschichtdicke, insbesondere absolute Schichtdicke, nicht oberhalb von 100 µm, bevorzugt nicht oberhalb von 80 µm und besonders bevorzugt im Bereich von 5 bis 60 µm. Unter der durchschnittlichen Trockenschichtdicke soll diejenige Dicke einer Beschichtung verstanden werden, die bei einmaligem Auftrag der erfindungsgemäßen Beschichtungsmasse erhalten wird. Die durchschnittliche Trockenschichtdicke der erfindungsgemäßen Beschichtungen kann gemäß der Norm DIN EN ISO 2808-2 (Mai 2007) bestimmt werden.

Derartige erfindungsgemäßen Beschichtungen haben sich als besonders günstig erwiesen, bei denen die Pigment-Volumen-Konzentration für transparente Beschichtungen, insbesondere Klarlacksysteme, 0 % beträgt oder bei denen die Pigment-Volumen-Konzentration für glänzende Beschichtungen, insbesondere glänzende Decklacke, zwischen 0 und 20 %, vorzugsweise im Bereich von 15 % bis kleiner 20 %, liegt oder bei denen die Pigment-Volumen-Konzentration für seidenmatte Beschichtungen, insbesondere seidenmatte Decklacke, im Bereich von 20 % bis 30 %, vorzugsweise im Bereich von 23 bis 28 %, liegt oder bei denen die Pigment-Volumen-Konzentration für Füllbeschichtungen, insbesondere Grundierungen, oberhalb von 30 %, vorzugsweise im Bereich von 35 bis 45 %, liegt.

Die der Erfindung zugrundeliegenden Aufgabe wird des Weiteren gelöst durch einen Kit-of-parts für ein erfindungsgemäßes Beschichtungssystem umfassend mindestens eine erfindungsgemäße Beschichtungsmasse und mindestens eine lösemittelhaltige Farbtonpaste.

Ferner wird die der Erfindung zu Grunde liegenden Aufgabe gelöst durch eine Beschichtung auf einem Substrat, erhalten oder erhältlich durch Auftragen und physikalisches und chemisches Trocknen der erfindungsgemäßen Beschichtungsmasse oder des erfindungsgemäßen Beschi chtungssystems.

Die der Erfindung zugrundeliegenden Aufgabe wird des Weiteren gelöst durch einen Kit-of-parts für ein erfindungsgemäßes Beschichtungssystem umfassend mindestens eine erfindungsgemäße Beschichtungsmasse und mindestens eine lösemittelhaltige Farbtonpaste.

Auch hat sich ferner als vorteilhaft erwiesen, dass die aus den erfindungsgemäßen Beschichtungsmaßnahem erhaltenen Beschichtungen keine oder eine nur sehr geringe Vergilbungstendenz zeigen, und das, obwohl Primärtrockner auf der Basis organischer Mangansalze üblicherweise eine stärkere Vergilbungstendenz hervorrufen als entsprechende Primärtrockner auf Kobaltbasis. Auch ist von praktischer Relevanz, dass sich mit den erfindungsgemäßen Beschichtungsmassen Filmhärten einstellen lassen, wie sie sich üblicherweise bei Einsatz herkömmlicher Kobalt-basierter Primärtrockner einstellen. Auch hat sich gezeigt, dass die Beschichtung nicht komplett durchgetrocknet zu sein hat, um überlackiert werden zu können. Darüber hinaus ist es mit den erfindungsgemäßen Beschichtungsmassen möglich, zu VOC-Werten unterhalb von 500 g/L zu gelangen. Beispielsweise gelangt man mit den erfindungsgemäßen Beschichtungsmassen für dekorative Anwendungen sogar zu VOC-Werten unterhalb von 300 g/L. Für die Bestimmung des Gehalts an flüchtigen organischen Verbindungen (VOC-Gehalt) kann auf die Norm DIN EN ISO 11890-1 (September 2007) zurückgegriffen werden.

Die besondere Anwenderfreundlichkeit der erfindungsgemäßen Beschichtungsmassen ist u.a. auch dadurch begründet, dass sich diese Beschichtungsmassen sowohl manuell, beispielsweise mit Pinsel oder Rolle, wie auch maschinell, beispielswies mittels Airless-Spritzverfahren, applizieren lassen. Hierbei kann der Verbrauch, insbesondere in Abhängigkeit vom Farbton, auf Mengen im Bereich von 40 bis 250 ml/m² eingestellt werden.

Die vielseitige Einsetzbarkeit der erfindungsgemäßen Beschichtungsmassen wird auch dadurch dokumentiert, dass diese sich mit herkömmlichen lösemittelhaltigen Farbtonpasten ohne weiteres abtönen lassen.

Überdies zeichnen sich die erfindungsgemäßen Beschichtungsmassen durch ein Rheologieprofil aus, dass bei vertikal applizierten Beschichtungen das Phänomen des Ablaufens ("*sagging*") unterbindet. Mit den erfindungsgemäßen Beschichtungsmassen gelingt folglich eine anwenderfreundliche Applizierbarkeit bzw. Handhabung. Die daraus erhaltenen BeSchichtungen zeichnen sich durch ein gutes Deckvermögen aus und verfügen überdies im frisch applizierten Zustand über einen guten Verlauf und ein ausgeprägtes Einebnungsverhalten bei gleichzeitig schneller Trocknung. Von besonderem Vorteil ist auch die ausgeprägte Geruchsarmut der mit den erfindungsgemäßen Beschichtungsmassen erhaltenen Beschichtungen, vorzugsweise auch während des Austrocknungsvorgangs. Für die Geruchsmessung kann als sensorische Prüfmethode auf die DIN ISO 16000-28 zurückgegriffen werden.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausfuhrungsformen wesentlich sein.

## Patentansprüche

1. Lösemittelhaltige Beschichtungsmasse für Lackbeschichtungen, insbesondere für Bautenlacke oder Bestandteile hiervon, enthaltend oder bestehend aus
a) mindestens einem oxidativ trocknenden organischen Bindemittel, ausgewählt aus der Gruppe bestehend aus mindestens einem oxidativ trocknenden Alkydharz mit einem Ölgehalt oberhalb von 60%,
b1) mindestens einem Primärtrockner basierend auf Eisen, umfassend oder bestehend aus mindestens einem Komplexsalz des Eisens,
c1) mindestens einem ersten Sekundärtrockner umfassend oder bestehend aus mindestens einem organischen Salz des Zirkoniums, Strontiums, Lithiums, Aluminiums, insbesondere einem organischen Salz des Zirkoniums und/oder Strontiums,
e1) mindestens einem ersten Hautverhinderungsmittel,
e2) mindestens einem zweiten Hautverhinderungsmittel, das bei 20 °C über einen höheren Dampfdruck verfügt als das erste Hautverhinderungsmittel,
f) mindestens einen Eisen-Komplexliganden, insbesondere ausgewählt aus mono-, di-, tri-, tetra-, penta- und hexadentaten Stickstoffdonorliganden und
d) gegebenenfalls mindestens einem Additiv.

2. Beschichtungsmasse nach Anspruch 1, ferner umfassend
c2) mindestens einen zweiten Sekundärtrockner umfassend oder bestehend aus mindestens einem organischen Salz des Calciums, Zinks und einer beliebigen Mischung hiervon.

3. Beschichtungsmasse nach Anspruch 1 oder 2, **dadurch gekennzeichnet, dass** das oxidativ trocknende organische Bindemittel ferner mindestens einen oxidativ trocknenden modifizierten Alkydharz mit einem Ölgehalt im Bereich von 40 bis 60 % und/oder Alkydharz mit einem Ölgehalt oberhalb von 60%, insbesondere ausgewählt aus der Gruppe bestehend aus silikonisierten Alkydharzen, acrylierten Alkydharzen, Isocyanat-modifizierten Alkydharzen und beliebigen Mischungen hiervon, insbesondere Isocyanat-modifizierte Alkydharze mit einem Ölgehalt oberhalb von 60%, umfasst.

4. Beschichtungsmasse nach einem der vorangehenden Ansprüche, **dadurch gekennzeichnet, dass**
das Lösemittel, insbesondere aromatenfreie, aliphatische Kohlenwasserstoffe, vorzugsweise ausgewählt aus der Gruppe bestehend aus, insbesondere entaromatisiertem Testbenzin, n-Paraffinen, Isoparaffinen, Cycloparaffinen und beliebigen Mischungen hiervon, umfasst oder hieraus besteht.

5. Beschichtungsmasse nach einem der vorangehenden Ansprüche, **dadurch gekennzeichnet, dass**
das Additiv ausgewählt ist aus der Gruppe bestehend aus Entschäumern, Lichtschutzmitteln, Radikalfängern, Netzmitteln, Dispergiermitteln, Oberflächenadditiven, insbesondere Silikonoberflächenadditiven, beispielsweise polyethermodifiziertes Polymethylalkylsiloxan und/oder Silikonpolyether-Copolymere und/oder oberflächenaktive Polyacrylate, Mattierungsmitteln, insbesondere Wachse und/oder Kieselsäuren, und beliebigen Mischungen dieser Verbindungen.

6. Beschichtungsmasse nach einem der vorangehenden Ansprüche, **dadurch gekennzeichnet, dass**
diese im Wesentlichen frei von Primärtrocknern auf Cobalt-Basis und/oder im Wesentlichen frei von Sekundärtrocknern auf Barium- und/oder Blei-Basis und/oder im Wesentlichen frei von 2-Ethylhexansäure ist.

7. Beschichtungsmasse nach einem der vorangehenden Ansprüche, **dadurch gekennzeichnet, dass**
das organische Salz des ersten und/oder zweiten Sekundärtrockners Neodecanoate, Oleate, Stearate, Palmitate, Octoate und/oder Naphthenate, insbesondere Neodecanoate, umfasst, besonders bevorzugt Zirkonium- und/oder Strontiumneodecanoate.

8. Beschichtungsmasse nach einem der vorangehenden Ansprüche, **dadurch gekennzeichnet, dass**
der Langölanteil der oxidativ trocknenden Alkydharze mit einem Ölgehalt oberhalb von 60% auf Linolsäure, Linolensäure und/oder Ölsäure und gegebenenfalls unter Zusatz von Palmitinsäure, insbesondere Linolsäure, Linolensäure, Ölsäure und Palmitinsäure, basiert und/oder dass
der Mittelölanteil der oxidativ trocknenden Alkydharze mit einem Ölgehalt im Bereich von 40 bis 60 % auf Linolsäure, Linolensäure und/oder Ölsäure und gegebenenfalls unter Zusatz von Palmitinsäure, insbesondere Linolsäure, Linolensäure, Ölsäure und Palmitinsäure, basiert.

9. Beschichtungsmasse nach einem der vorangehenden Ansprüche, **dadurch gekennzeichnet, dass**
die oxidativ trocknenden Alkydharze mit einem Ölgehalt oberhalb von 60%, ermittelt gemäß DIN 53241-1, eine Jodzahl nicht größer als 120, insbesondere nicht größer als 100, bevorzugt im Bereich von 20 bis 120 oder 20 bis 100 und besonders bevorzugt im Bereich von 40 bis 80 aufweisen.

10. Beschichtungsmasse nach einem der vorangehenden Ansprüche, **dadurch gekennzeichnet, dass**
der Anteil an dem Primärtrockner basierend auf Eisen, in Bezug auf dessen Metallanteil, im Bereich von 0,0001 bis 0,10 Gewichtsprozent, bevorzugt im Bereich von 0,0005 bis 0,05 Gewichtsprozent und besonders bevorzugt im Bereich von 0,001 bis 0,006 Gewichtsprozent liegt, jeweils bezogen auf das Gesamtgewicht an oxidativ trocknendem organischen Bindemittel, und/oder dass
der Anteil an dem mindestens einen ersten Sekundärtrockner umfassend oder bestehend aus mindestens einem organischen Salz des Zirkoniums, Strontiums, Lithiums und/oder Aluminiums, in Bezug auf dessen Metallanteil, im Bereich von 0,01 bis 3,0 Gewichtsprozent, bevorzugt im Bereich von 0,05 bis 2,0 Gewichtsprozent und besonders bevorzugt im Bereich von 0,1 bis 1,5 Gewichtsprozent liegt, jeweils bezogen auf das Gesamtgewicht an oxidativ trocknendem organischen Bindemittel, und/oder dass
der Anteil an dem mindestens einen zweiten Sekundärtrockner umfassend oder bestehend aus mindestens einem organischen Salz des Calciums, Lithiums und einer beliebigen Mischung, in Bezug auf dessen Metallanteil, hiervon im Bereich von 0,001 bis 5,0 Gewichtsprozent, bevorzugt im Bereich von 0,01 bis 3,0 Gewichtsprozent und besonders bevorzugt im Bereich von 0,1 bis 1,0 Gewichtsprozent liegt, jeweils bezogen auf das Gesamtgewicht an oxidativ trocknendem organischen Bindemittel, und/oder dass
der Anteil an Lösemittel im Bereich von 7 bis 45 Gewichtsprozent, bevorzugt 9 bis 40 Gewichtsprozent liegt, jeweils bezogen auf das Gesamtgewicht der Beschichtungsmasse, wobei die Anteile der die Beschichtungsmasse bildenden Komponenten jeweils stets 100 Gewichtsprozent ergeben.

11. Beschichtungsmasse nach einem der vorangehenden Ansprüche, **dadurch gekennzeichnet, dass** diese frei von Methylethylketoxim ist.

12. Beschichtungssystem enthaltend oder gebildet aus mindestens einer Beschichtungsmasse nach einem der vorangehenden Ansprüche und mindestens einer lösemittelhaltigen Farbtonpaste.

13. Beschichtung auf einem Substrat, insbesondere Decklackbeschichtung, Grundierungsbeschichtung, Grundierungs-Decklack-1-Topf-Beschichtung oder transparente oder semitransparente Endbeschichtung, erhalten oder erhältlich durch
Auftragen und physikalisches und chemisches Trocknen der Beschichtungsmasse gemäß einem der Ansprüche 1 bis 11 oder des Beschichtungssystems nach Anspruch 12.

14. Beschichtung nach Anspruch 13, **dadurch gekennzeichnet, dass**
diese über eine durchschnittliche, insbesondere absolute, Trockenschichtdicke, bestimmt gemäß DIN EN ISO 2808-2 (Mai 2007), nicht oberhalb von 100 µm, bevorzugt nicht oberhalb von 80 µm und besonders bevorzugt im Bereich von 5 bis 60 µm verfügt.

15. Beschichtung nach Anspruch 13 oder 14, ferner umfassend
ein Substrat, insbesondere ausgewählt aus, vorzugsweise vorbehandeltem, Holz, Metall und Kunststoff, insbesondere Hart-PVC.

16. Kit-of-parts für ein Beschichtungssystem, insbesondere nach Anspruch 12, umfassend
mindestens eine Beschichtungsmasse nach einem der Ansprüche 1 bis 11 und mindestens eine lösemittelhaltige Farbtonpaste.

17. Verwendung der Beschichtungsmasse nach einem der Ansprüche 1 bis 11 oder des Beschichtungssystems nach Anspruch 12 oder des Kit-of-parts gemäß Anspruch 16 als oder für die Herstellung von Bautenlacken im Innen- und/oder Außenbereich.

18. Verwendung der Beschichtungsmasse nach einem der Ansprüche 1 bis 11 oder des Beschichtungssystems nach Anspruch 12 oder des Kit-of-parts gemäß Anspruch 16 für die Herstellung von Decklackbeschichtungen, Grundierungsbeschichtungen, Grundierungs-Decklack-1-Topf-Beschichtungen oder von transparenten oder semitransparenten Endbeschichtungen im Innen- und/oder Außenbereich.

## Claims

1. A solvent-containing coating composition for paint coatings, in particular for architectural paints or constituents thereof, containing or consisting of
a) at least one oxidatively drying organic binding agent, selected from the group consisting of at least one oxidatively drying alkyd resin having an oil content of greater than 60%,
b1) at least one primary drier based on iron, comprising or consisting of at least one complex salt of iron,
c1) at least one first secondary drier comprising or consisting of at least one organic salt of zirconium, strontium, lithium, or aluminum, in particular an organic salt of zirconium and/or strontium,
e1) at least one first anti-skinning agent,
e2) at least one second anti-skinning agent, which has a higher vapor pressure at 20°C than the first anti-skinning agent,
f) at least one iron complex ligand, in particular selected from monodentate, didentate, tridentate, tetradentate, pentadentate and hexadentate nitrogen-donor ligands and
d) optionally at least one additive.

2. The coating composition according to Claim 1, further comprising
c2) at least one second secondary drier comprising or consisting of at least one organic salt of calcium, zinc, and any mixture thereof.

3. The coating composition according to Claim 1 or 2, **characterized in that** the oxidatively drying organic binding agent further comprises at least one oxidatively drying modified alkyd resin having an oil content in the range of from 40 to 60% and/or alkyd resin having an oil content of greater than 60%, in particular selected from the group consisting of siliconized alkyd resins, acrylated alkyd resins, isocyanate-modified alkyd resins, and any mixtures thereof, in particular isocyanate-modified alkyd resins having an oil content of greater than 60%.

4. The coating composition according to any one of the preceding claims, **characterized in that**
the solvent comprises or consists of aliphatic hydrocarbons that are in particular free of aromatic compounds, said hydrocarbons preferably being selected from the group consisting of in particular dearomatized white spirit, n-paraffins, isoparaffins, cycloparaffins, and any mixtures thereof.

5. The coating composition according to any one of the preceding claims, **characterized in that**
the additive is selected from the group consisting of defoamers, light stabilizers, free radical scavengers, wetting agents, dispersants, surface-active additives, in particular silicone surface-active additives, for example polyether-modified polymethylalkylsiloxane and/or silicone polyether copolymers and/or surface-active polyacrylates, matting agents, in particular waxes and/or silicas, and any mixtures of these compounds.

6. The coating composition according to any one of the preceding claims, **characterized in that**
said composition is substantially free of cobalt-based primary driers and/or substantially free of barium-based and/or lead-based secondary driers and/or substantially free of 2-ethylhexanoic acid.

7. The coating composition according to any one of the preceding claims, **characterized in that**
the organic salt of the first and/or second secondary drier comprises neodecanoates, oleates, stearates, palmitates, octoates and/or naphthenates, in particular neodecanoates, particularly preferably zirconium and/or strontium neodecanoates.

8. The coating composition according to any one of the preceding claims, **characterized in that**
the long-oil fraction of the oxidatively drying alkyd resins having an oil content of greater than 60% is based on linoleic acid, linolenic acid and/or oleic acid, and optionally with the addition of palmitic acid, in particular linoleic acid, linolenic acid, oleic acid, and palmitic acid, and/or **in that**
the medium-oil fraction of the oxidatively drying alkyd resins having an oil content in the range of from 40 to 60% is based on linoleic acid, linolenic acid and/or oleic acid, and optionally with the addition of palmitic acid, in particular linoleic acid, linolenic acid, oleic acid, and palmitic acid.

9. The coating composition according to any one of the preceding claims, **characterized in that**
the oxidatively drying alkyd resins having an oil content of greater than 60%, determined in accordance with DIN 53241-1, have an iodine value of no greater than 120, in particular no greater than 100, preferably in the range of from 20 to 120 or 20 to 100 and particularly preferably in the range of from 40 to 80.

10. The coating composition according to any one of the preceding claims, **characterized in that**
the fraction of the primary drier based on iron, in relation to its metal fraction, is in the range of from 0.0001 to 0.10 weight percent, preferably in the range of from 0.0005 to 0.05 weight percent, and particularly preferably in the range of from 0.001 to 0.006 weight percent, in each case based on the total weight of oxidatively drying organic binding agent, and/or **in that**
the fraction of the at least one first secondary drier comprising or consisting of at least one organic salt of zirconium, strontium, lithium and/or aluminum, in relation to its metal fraction, is in the range of from 0.01 to 3.0 weight percent, preferably in the range of from 0.05 to 2.0 weight percent, and particularly preferably in the range of from 0.1 to 1.5 weight percent, in each case based on the total weight of oxidatively drying organic binding agent, and/or **in that**
the fraction of the at least one second secondary drier comprising or consisting of at least one organic salt of calcium, lithium, and any mixture thereof, in relation to its metal fraction, is in the range of from 0.001 to 5.0 weight percent, preferably in the range of from 0.01 to 3.0 weight percent, and particularly preferably in the range of from 0.1 to 1.0 weight percent, in each case based on the total weight of oxidatively drying organic binding agent, and/or **in that**
the fraction of solvent is in the range of from 7 to 45 weight percent, preferably 9 to 40 weight percent, in each case based on the total weight of the coating composition, with the fractions of the components forming the coating composition always adding up to 100 weight percent in each case.

11. The coating composition according to any one of the preceding claims, **characterized in that**
said composition is free of methylethyl ketone oxime.

12. A coating system containing or formed by at least one coating composition according to any one of the preceding claims and at least one solvent-containing coloring paste.

13. A coating on a substrate, in particular a top coat, a primer coat, a primer/top-coat one-pot coat, or a transparent or semi-transparent final coat, obtained or obtainable by applying and physically and chemically drying the coating composition according to any one of Claims 1 to 11 or of the coating system according to Claim 12.

14. The coating according to Claim 13, **characterized in that**
said coating has an average, in particular absolute, dry film thickness, determined in accordance with DIN EN ISO 2808-2 (May 2007), of no greater than 100 µm, preferably of no greater than 80 µm, and particularly preferably in the range of from 5 to 60 µm.

15. The coating according to Claim 13 or 14, further comprising
a substrate, in particular selected from, preferably pre-treated, wood, metal, and plastics material, in particular unplasticized PVC.

16. A kit of parts for a coating system, in particular according to Claim 12, comprising at least one coating composition according to any one of Claims 1 to 1 1 and at least one solvent-containing coloring paste.

17. Use of the coating composition according to any one of Claims 1 to 11 or of the coating system according to Claim 12 or of the kit of parts according to Claim 16 as or for the production of architectural paints for interior and/or exterior areas.

18. Use of the coating composition according to any one of Claims 1 to 11 or of the coating system according to Claim 12 or of the kit of parts according to Claim 16 for the production of top coats, primer coats, primer/top-coat one-pot coats, or transparent or semi-transparent final coats for interior and/or exterior areas.

## Revendications

1. Composition de revêtement comprenant un solvant, destinée à des revêtements laqués, notamment destinée à des peintures pour le bâtiment ou des composants de celles-ci, contenant ou comportant
a) au moins un liant organique à séchage oxydatif, sélectionné parmi le groupe constitué d'au moins une résine alkyde à séchage oxydatif avec une teneur en huile supérieure à 60 %,
b1) au moins un siccatif primaire à base de fer, comprenant ou comportant au moins un sel complexe du fer,
c1) au moins un premier siccatif secondaire, comprenant ou comportant au moins un sel organique du zirconium, du strontium, du lithium, de l'aluminium, notamment un sel organique du zirconium et/ou du strontium,
e1) au moins un premier agent anti-peau,
e2) au moins un second agent anti-peau, qui possède une pression de vapeur supérieure à celle du premier agent anti-peau à 20 °C,
f) au moins un ligand de complexe de fer, notamment sélectionné parmi les ligands azotés mono-, di-, tri-, tétra-, penta- et hexadentates et
d) éventuellement au moins un additif, s'il y a lieu.

2. Composition de revêtement selon la revendication 1, comprenant en outre
c2) au moins un second siccatif secondaire comprenant ou comportant au moins un sel organique du calcium, du zinc et un mélange quelconque de ceux-ci.

3. Composition de revêtement selon la revendication 1 ou 2, **caractérisée en ce que** le liant organique à séchage oxydatif comprend encore au moins une résine alkyde modifiée à séchage oxydatif avec une teneur en huile dans la plage de 40 à 60 % et/ou une résine alkyde avec une teneur en huile supérieure à 60 %, notamment sélectionnée parmi le groupe constitué de résines alkydes siliconées, de résines alkydes acryliques, de résines alkydes modifiées à base d'isocyanate et des mélanges quelconques de ceux-ci, notamment de résines alkydes modifiées à base d'isocyanate avec une teneur en huile supérieure à 60 %.

4. Composition de revêtement selon l'une quelconque des revendications précédentes, **caractérisée en ce que** le solvant comprend ou comporte des hydrocarbures aliphatiques, notamment non aromatiques, sélectionnés de préférence parmi le groupe constitué notamment de white spirit (*essence minérale*) désaromatisé, de n-paraffines. d'isoparaffines, de cycloparaffines et des mélanges quelconques de ceux-ci.

5. Composition de revêtement selon l'une quelconque des revendications précédentes, **caractérisée en ce que** l'additif est sélectionné parmi le groupe constitué d'agents antimoussants, d'inhibiteurs de lumière, de neutralisateurs de radicaux libres, d'agents mouillants, d'agents dispersants, d'additifs de surface, notamment d'additifs de surface aux silicones, par exemple du polyméthylalkylsiloxane modifié polyéther et/ou des copolymères silicone-polyéther et/ou des polyacrylates tensio-actifs, des agents de matage, notamment des cires et/ou des acides siliciques, et des mélanges quelconques de ces composés.

6. Composition de revêtement selon l'une quelconque des revendications précédentes, **caractérisée en ce que** celle-ci est essentiellement dépourvue de siccatifs primaires à base de cobalt et/ou essentiellement dépourvue de siccatifs secondaires à base de baryum et/ou de plomb et/ou essentiellement dépourvue d'acide 2-éthylhexanoïque.

7. Composition de revêtement selon l'une quelconque des revendications précédentes, **caractérisée en ce que** le sel organique du premier et/ou du second siccatif secondaire comprend des néodécanoates, des oléates, des stéarates, des palmitates, des octoates et/ou des naphténates, notamment des néodécanoates, mieux encore des néodécanoates de zirconium et/ou de strontium.

8. Composition de revêtement selon l'une quelconque des revendications précédentes, **caractérisée en ce que** la fraction longue en huile des résines alkydes à séchage oxydatif avec une teneur en huile supérieure à 60 % est à base d'acide linoléique, d'acide linolénique et/ou d'acide oléique et, éventuellement, par ajout d'acide palmitique, notamment d'acide linoléique, d'acide linolénique, d'acide oléique et d'acide palmitique et/ou que
la fraction moyenne en huile des résines alkydes à séchage oxydatif avec une teneur dans la plage de 40 à 60 % est à base d'acide linoléique, d'acide linolénique et/ou d'acide oléique et, éventuellement, par ajout d'acide palmitique, notamment d'acide linoléique, d'acide linolénique, d'acide oléique et d'acide palmitique.

9. Composition de revêtement selon l'une quelconque des revendications précédentes, **caractérisée en ce que** les résines alkydes à séchage oxydatif avec une teneur en huile supérieure à 60 %, déterminée d'après la norme DIN 53241-1, présentent un indice d'iode pas plus élevé que 120, notamment pas plus élevé que 100, de préférence dans la plage de 20 à 120 ou de 20 à 100 et mieux encore dans la plage de 40 à 80.

10. Composition de revêtement selon l'une quelconque des revendications précédentes, **caractérisée en ce que** la fraction de siccatif primaire à base de fer se situe par rapport à sa fraction métallique dans la plage de 0,0001 à 0,10 pour cent en poids, de préférence dans la plage de 0,0005 à 0,05 pour cent en poids et mieux encore dans la plage de 0,001 à 0,006 pour cent en poids, par rapport respectivement au poids total de liant organique à séchage oxydatif, et/ou que
la fraction dudit premier siccatif secondaire au moins, comprenant ou comportant au moins un sel organique du zirconium, du strontium, du lithium et/ou de l'aluminium, se situe par rapport à sa fraction métallique dans la plage de 0,01 à 3,0 pour cent en poids, de préférence dans la plage de 0,05 à 2,0 pour cent en poids et mieux encore dans la plage de 0,1 à 1,5 pour cent en poids, par rapport respectivement au poids total de liant organique à séchage oxydatif, et/ou que
la fraction dudit second siccatif secondaire au moins comprenant ou comportant au moins un sel organique du calcium, du lithium et du mélange quelconque de ceux-ci, se situe par rapport à sa fraction métallique dans la plage de 0,001 à 5,0 pour cent en poids, de préférence dans la plage de 0,01 à 3,0 pour cent en poids et mieux encore dans la plage de 0,1 à 1,0 pour cent en poids, par rapport respectivement au poids total de liant organique à séchage oxydatif, et/ou que
la fraction de solvant se situe dans la plage de 7 à 45 pour cent en poids, de préférence dans la plage de 9 à 40 pour cent en poids, par rapport respectivement au poids total de la composition de revêtement, sachant que les fractions des constituants formant la composition de revêtement représentent toujours respectivement 100 pour cent en poids.

11. Composition de revêtement selon l'une quelconque des revendications précédentes, **caractérisée en ce que** celle-ci est dépourvue de méthyléthylcétoxime.

12. Système de revêtement dont le contenu ou la constitution est à base d'au moins une composition de revêtement selon l'une des revendications précédentes et d'au moins une pâte de couleur à base de solvant.

13. Revêtement sur un substrat, notamment revêtement d'une peinture de finition, revêtement d'une peinture d'apprêt, revêtement d'une peinture de finition et d'apprêt à partir d'un seul pot ou revêtement final transparent ou semi-transparent, obtenu ou pouvant être obtenu par l'application et le séchage physique et chimique de la composition de revêtement selon l'une quelconque des revendications 1 à 11 ou du système de revêtement selon la revendication 12.

14. Revêtement selon la revendication 13, **caractérisée en ce que** celui-ci possède une épaisseur de couche sèche moyenne, notamment absolue, déterminée d'après la norme DIN EN ISO 2808-2 (mai 2007), n'étant pas supérieure à 100 µm, de préférence n'étant pas supérieure à 80 µm et mieux encore dans la plage de 5 à 60 µm.

15. Revêtement selon la revendication 13 ou 14, comprenant encore un substrat, notamment sélectionné, de préférence prétraité, à base de bois, de métal et de matière plastique, en particulier de PVC rigide.

16. Kit de pièce d'un système de revêtement, notamment selon la revendication 12, comprenant au moins une composition de revêtement selon l'une quelconque des revendications 1 à 11 et au moins une pâte de couleur à base de solvant.

17. Utilisation de la composition de revêtement selon l'une quelconque des revendications 1 à 11 ou du système de revêtement selon la revendication 12 ou du kit de pièce selon la revendication 16 en vue de la fabrication ou servant de peintures pour le bâtiment à l'intérieur et/ou à l'extérieur.

18. Utilisation de la composition de revêtement selon l'une quelconque des revendications 1 à 11 ou du système de revêtement selon la revendication 12 ou du kit de pièce selon la revendication 16 pour la fabrication de revêtements d'une peinture de finition, de revêtements d'une peinture d'apprêt, de revêtements d'une peinture de finition et d'apprêt à partir d'un seul pot ou de revêtements finaux transparents ou semi-transparents à l'intérieur et/ou à l'extérieur.
